# DEMANDE DE BREVET EUROPEEN

(11) **EP 4 223 710 A1**
(43) Date de publication de la demande: **09.08.2023**
(21) Numéro de dépôt: 23154803.3
(22) Date de dépôt: 02.02.2023
(51) Int. Cl.: C03B 7/16, C03B 7/06

(54) **SUPPORT DE COULOIR D'UNE MACHINE DE FORMAGE D'ARTICLES CREUX EN VERRE, ÉQUIPÉ DE MOYEN D'INJECTION D'AIR VENTILÉ DANS DES COULOIRS D'ACHEMINEMENT DE PARAISONS**

(30) Priorité: 02.02.2022 FR 2200938
(71) Demandeur: Technical Machine Equipment Engineering T.M.E. Engineering, 62510 Arques (FR)
(72) Inventeur: DE FEUARDENT, Jean-François, 62200 Boulogne-sur-Mer (FR)
(74) Mandataire: RVDB

(57) **Abrégé**

La présente invention concerne un support de couloir (20) d'une machine (9) de formage d'articles creux en verre, comprenant une première pièce de support (27), un premier étrier permanent (31) assemblé à la première pièce de support (27) et comportant une première zone de logement (42) dimensionnée pour réceptionner un tronçon d'extrémité aval d'un premier couloir présentant une première section S1 dans un plan de coupe transversal. Le premier étrier permanent (31) comprend un fond (41) muni d'une première embouchure (43) débouchant dans la première zone de logement (42). L'invention concerne également une machine (9) de formage d'articles creux en verre équipée d'un tel support de couloir (20).

## Description

### Domaine technique

La présente invention concerne le domaine de la fabrication d'articles creux en verre, et porte tout particulièrement sur un support de couloir d'une machine de formage d'articles creux en verre, dite machine IS.

La présente invention vise à optimiser l'acheminement des gouttes de verre en fusion, également appelées des paraisons, jusqu'aux moules ébaucheurs des sections de la machine IS, par l'intermédiaire de couloirs, tout en impactant pas sur le temps de changement des couloirs lors d'une modification de la production.

La présente invention vise également à optimiser le temps d'adaptation de la machine IS lors d'un changement de fabrication d'articles creux en verre imposant une modification de la taille et/ou du nombre de couloirs.

### Etat de la technique

Une installation de fabrication d'articles creux en verre, dénommée par la suite « installation » comprend traditionnellement un poste de composition dans lequel sont mélangées les matières premières (sable, calcaire, carbonate de sodium, calcin, verre recyclé ...) qui entrent dans la composition du verre selon des proportions définies en fonction du type de verre désiré. L'installation comprend un four dans lequel est ensuite déversé le mélange de matières premières, ledit mélange étant fondu à des températures généralement comprises entre 1300°C et 1550°C. Le verre en fusion est ensuite acheminé au moyen de canaux (appelés « feeders ») jusqu'à des machines de formage des articles creux en verre (appelées « machines IS ») en ajustant la température du verre en fusion pour qu'il soit à une bonne viscosité de travail et à une température homogène au moment de la formation des gouttes de verre, également appelées des paraisons. Chaque canal (ou feeder) est terminé par une cuvette et un mécanisme de formation des paraisons qui permet de couper les paraisons selon un poids défini à des cadence pouvant atteindre de l'ordre de quatre cents paraisons à la minute (400 paraisons/minute). La machine IS est composée de plusieurs sections variant généralement entre six et douze sections, les paraisons en sortie du mécanisme de formation des paraisons étant acheminées jusqu'aux sections de la machine IS notamment par l'intermédiaire de couloirs. Chaque section comprend un dispositif ébaucheur permettant la formation d'une ou plusieurs ébauches d'articles creux en verre qui seront transférées dans un dispositif finisseur pour former définitivement un ou plusieurs articles creux en verre. Le dispositif ébaucheur comprend un ou plusieurs moules ébaucheurs et le dispositif finisseur comprend un ou plusieurs moules finisseurs. Le nombre de moules ébaucheurs sur le dispositif ébaucheur et le nombre de moules finisseurs sur le dispositif finisseur peuvent atteindre quatre pour certaines fabrications, en particulier des petits articles creux en verre. Le moule ébaucheur et le moule finisseur sont composés chacun de deux parties de moule, un mécanisme d'actionnement permettant d'ouvrir les deux parties de moule pour libérer l'ébauche d'article ou l'article fini et de les fermer pour constituer ladite ébauche d'article dans le moule ébaucheur ou ledit article fini dans le moule finisseur. Le transfert de l'ébauche d'article du moule ébaucheur vers moule finisseur est réalisé par un bras de transfert articulé qui saisit l'ébauche d'article une fois les parties du moule ébaucheur ouvertes et la déplace entre les parties de moule finisseur ouvertes, avant de refermer lesdites parties de moule finisseur pour la finition de l'article creux en verre. L'article creux en verre fini est ensuite transféré sur un convoyeur pour être acheminé vers une arche de recuisson où les articles creux en verre sont refroidis sous contrôle pour éviter une fragilisation due à des variations trop brusques de température.

Chaque couloir a son extrémité amont qui est engagée sur un support, également appelé une araignée, ladite extrémité amont étant alimentée en paraison depuis un gouttière coudée également appelée un SCOOP. Chaque couloir a en outre son extrémité aval qui est supportée par une fourchette montée sur un bras de support, la fourchette comprenant une zone de logement en forme de U qui reçoit le tronçon d'extrémité aval du couloir et assure son maintien devant un déflecteur permettant de transférer la paraison de la sortie du couloir jusque dans un entonnoir permettant l'introduction de la paraison dans un moule du dispositif ébaucheur. Le nombre de couloirs et, donc, de bras de support dépend du nombre moule ébaucheur sur le dispositif ébaucheur. De même, la section de ces couloirs dans un plan de coupe transversal dépend du nombre de moules ébaucheurs sur le dispositif ébaucheur ; un dispositif ébaucheur comprenant un seul moule ébaucheur permet la réalisation d'un article creux en verre plus volumineux qu'un article creux en verre fabriqué au moyen d'un dispositif ébaucheur comprenant deux, trois ou quatre moules ébaucheurs, et nécessite donc une paraison plus grosse imposant d'augmenter ladite section transversale du couloir pour que ladite paraison puisse glisser convenablement dans le couloir.

Lors d'un changement de production consistant à remplacer sur les sections les dispositifs ébaucheurs et les dispositifs finisseur comprenant chacun par exemple deux moules par d' autres comprenant chacun par exemple un seul moule, ou inversement, cela impose de remplacer sur les bras de supports les fourchettes qui doivent disposer d'une zone de logement adaptée à la section transversale du couloir. Cette opération est fastidieuse et nécessite un temps considérable d'adaptation de la machine IS pour le changement de production puisque cela doit se faire pour chaque couloir.

Les couloirs sur la machine IS peuvent également présenter un problème de glisse des paraisons, engendrant la formation de dépôts de type calcins à l'intérieur de ces couloirs et, par conséquent, leur encrassement influant sur la cadence de distribution des paraisons aux dispositifs ébaucheurs sur les sections et aussi sur la température des paraisons distribuées, ce qui peut engendrer des défauts dans les articles creux en verre fabriqués.

Il est connu les titres FR 20 387 E et US 3 650 723 A qui divulguent des conceptions de couloirs sur des machines. Dans le document FR 20 387 E, il est prévu une configuration permettant de décharger périodiquement un courant d'eau à la surface du conduit afin d'améliorer la glisse des paraisons dans les couloirs. Dans le document US 3 650 723 A, il est prévu de faire circuler un fluide refroidissant dans une chambre agencés dans le fond du conduit, la chambre comprenant une entrée et une sortie connectées à une boucle d'un circuit de fluide refroidissant.

### Résumé de l'invention

La présente invention a pour premier objectif de faciliter la glisse des paraisons dans les couloirs et d'éviter leur encrassement, tout n'impactant pas sur le temps d'adaptation de la machine IS lors d'un changement de production nécessitant le remplacement des couloirs.

Un second objectif de la présente invention est de faciliter l'adaptation de la machine IS lors d'un changement de production nécessitant le remplacement des couloirs pour les adapter à la dimension des paraisons distribuées des dispositifs ébaucheurs sur les sections de la machine IS.

Ces objectifs sont atteints grâce à l'invention qui concerne tout d'abord un support de couloir d'une machine de formage d'articles creux en verre, lequel comprend une première pièce de support et un premier étrier permanent assemblé à la première pièce de support et comportant une première zone de logement dimensionnée pour réceptionner un tronçon d'extrémité aval d'un premier couloir qui présente une première section S1 dans un plan de coupe transversal et qui comporte dans son tronçon d'extrémité aval une troisième embouchure d'accès à un canal de circulation d'air agencé sur ledit couloir. On entend par couloir présentant une section en forme de U dans un plan de coupe transversal, le fait que le couloir présente la forme d'une gouttière, la forme de cette gouttière dans un plan de coupe transversal étant plus ou moins celle d'un « U », cette forme du U pouvant bien entendu légèrement varier et, par exemple, présenter des biseaux. En outre, selon l'invention, le premier étrier permanent comprenant un fond muni d'une première embouchure débouchant dans la première zone de logement. La première embouchure est configurée pour communiquer avec la troisième embouchure lorsque la première zone de logement réceptionne le tronçon d'extrémité aval du premier couloir. Cette conception permet le passage d'un flux d'air ventilé qui alimentera le couloir placé sur le support de couloir, comme cela sera précisé ci-après.

De préférence, selon cette réalisation, le support de couloir comprend un organe d'étanchéité agencé autour de la première embouchure sur le fond du premier étrier permanent, dans la première zone de logement, de sorte à assurer l'étanchéité entre la première embouchure et la troisième embouchure lorsque la première zone de logement réceptionne le tronçon d'extrémité aval du premier couloir.

De préférence, selon cette réalisation, le support de couloir comprend un premier connecteur agencé sous le premier étrier permanent et raccordé à la première embouchure, ledit premier connecteur étant configuré pour permettre la connexion d'un circuit d'air.

De préférence, selon cette réalisation, le support de couloir comprend un premier dispositif de réglage agencé entre la première pièce de support et le premier étrier permanent. Le premier dispositif de réglage est configuré pour modifier la position en hauteur dudit étrier permanent, ce qui permet d'adapter la position du tronçon d'extrémité aval du couloir par rapport au déflecteur qui reçoit la paraison en sortie dudit couloir. Ainsi le dispositif de réglage permet d'adapter au mieux l'installation lors d'un changement de couloir sur la machine IS.

Selon une réalisation, le support de couloir comprend une seconde pièce de support et un second étrier permanent assemblé à la seconde pièce de support et comportant une troisième zone de logement dimensionnée pour réceptionner un tronçon d'extrémité aval d'un second couloir présentant une seconde section S2 dans un plan de coupe transversal. En outre, le second étrier permanent comprend un second fond muni d'une seconde embouchure débouchant dans la troisième zone de logement. Cette conception permet au support de couloir de recevoir deux couloirs présentant une seconde section S2 dans un plan de coupe transversal, l'un des deux seconds couloirs ayant son tronçon d'extrémité aval logé dans le premier étrier permanent fixé à la première pièce de support, soit directement soit par l'intermédiaire d'un étrier amovible, comme cela sera détaillé ci-après, et l'autre des deux seconds couloirs ayant son extrémité aval logé dans le second étrier permanent fixé à la seconde pièce de support.

De préférence, selon cette réalisation, le support de couloir comprend un second organe d'étanchéité agencé autour de la seconde embouchure sur le second fond du second étrier permanent, dans la troisième zone de logement.

De préférence, selon cette réalisation, le support de couloir comprend un second connecteur agencé sous le second étrier permanent et raccordé à la seconde embouchure, ledit second connecteur étant configuré pour permettre la connexion d'un circuit d'air.

De préférence, selon cette réalisation, la première pièce de support et la seconde pièce de support sont deux pièces indépendantes montées sur deux bras de support indépendants du support de couloir. En variante, la première pièce de support et la seconde pièce de support pourraient être constituées d'une seule pièce montée sur un seul bras de support.

De préférence, selon cette réalisation, le support de couloir comprend un second dispositif de réglage agencé entre la seconde pièce de support et le second étrier permanent. Ce second dispositif de réglage est configuré pour modifier la position en hauteur dudit étrier permanent, ce qui permet d'adapter la position du tronçon d'extrémité aval du couloir par rapport au déflecteur qui reçoit la paraison en sortie dudit couloir. Ainsi le dispositif de réglage permet d'adapter au mieux l'installation lors d'un changement de couloir sur la machine IS.

Dans une version de base du support de couloir, la première section S1 et la seconde section S2 sont identiques. En d'autres termes le premier étrier permanent et le second étrier permanent sont identiques, ceux-ci permettant la réception des tronçons d'extrémité aval de deux conduits présentant une même section (S1 et S2 identiques).

Dans une version améliorée et préférentielle, le support de couloir comprend un étrier amovible dont la forme externe est complémentaire à la première zone de logement pour venir se placer dans ladite première zone de logement et monter l'étrier amovible dans le premier étrier permanent. En outre, ledit étrier amovible comporte une seconde zone de logement dimensionnée pour réceptionner un tronçon d'extrémité aval d'un second couloir présentant une seconde section S2 dans un plan de coupe transversal, la seconde section S2 étant plus petite que la premier section S1. En d'autres termes, le premier étrier permanent et le second étrier permanent présentent des dimensions différentes, le premier étrier permettant soit la réception d'un tronçon d'extrémité aval d'un premier couloir soit, lorsque l'étrier amovible est placé dans le premier étrier permanent, la réception d'un tronçon d'extrémité aval d'un second couloir, le second étrier permanent permettant la réception d'un tronçon d'extrémité aval d'un second couloir.

Selon cette réalisation du support de couloir, l'étrier amovible comprend un fond ouvert configurée pour que la première embouchure débouche dans la seconde zone de logement lorsque l'étrier amovible est placé dans le premier étrier permanent. On entend par fond ouvert, le fait que l'étrier amovible peut ne pas comporter de matière dans le fond, c'est-à-dire être complètement ouvert, ou que cet étrier amovible peut comporter une seconde embouchure qui correspond avec la première embouchure sur le fond du premier étrier permanent lorsque l'étrier amovible est placé dans ledit premier étrier permanent. Un second organe d'étanchéité peut également être agencé autour de la seconde embouchure sur un fond de l'étrier amovible, dans la seconde zone de logement, en la présence d'une telle seconde embouchure sur un fond de l'étrier amovible. Cette conception permet le passage d'un flux d'air ventilé qui alimentera le couloir placé sur le support de couloir, comme cela sera précisé ci-après.

Des variantes de réalisation du support de couloir peuvent prévoir de dupliquer une, deux voire trois fois toutes ou parties des caractéristiques décrites précédemment et objets de l'invention. L'invention concerne également une machine de formage d'articles creux en verre, dite machine IS, laquelle comprend au moins un support de couloir présentant l'une et/ou l'autre des caractéristiques précitées. De préférence, la machine IS comprend entre deux et seize supports de couloir, un pour chaque section de ladite machine IS. Dans la mesure où un dispositif ébaucheur d'une section peut comporter entre un et quatre moules ébaucheurs, chaque support de couloir peut dupliquer les caractéristiques objets de l'invention afin de recevoir les tronçons d'extrémité aval de quatre couloirs.

Selon une première réalisation de la machine IS, chaque support de couloir comprend les caractéristiques précitées avec au moins un étrier amovible placé dans le premier étrier permanent et un second étrier permanent. En outre, la machine IS comprend autant de premiers couloirs que de supports de couloir, chaque premier couloir ayant son tronçon d'extrémité aval positionné dans la première zone de logement, l'étrier amovible étant retiré du premier étrier permanent. Par ailleurs, chaque premier couloir comporte dans son tronçon d'extrémité aval une troisième embouchure d'accès à un canal de circulation d'air qui débouche sur des orifices de sortie aménagés le long d'une paroi interne dudit premier couloir, ladite troisième embouchure communiquant avec la première embouchure lorsque le tronçon d'extrémité aval du premier couloir est placé dans la première zone de logement. Ainsi, lorsque de l'air ventilé est injecté dans la première embouchure sur le premier étrier permanent, cet air ventilé pénètre dans le canal de circulation d'air par la troisième embouchure qui communique avec la première embouchure ; l'air ventilé se propage dans le canal de circulation d'air est sort dans le premier couloir sur toute sa longueur, par sa paroi interne. Cet air ventilé dans le premier couloir améliore la glisse de la paraison dans celui-ci.

Selon une seconde réalisation de la machine IS, chaque support de couloir comprend les caractéristiques précitées avec au moins un étrier amovible placé dans le premier étrier permanent et un second étrier permanent. En outre, la machine IS comprend autant de paires de seconds couloirs que de supports de couloir, chaque paire de seconds couloirs ayant un tronçon d'extrémité aval de l'un des deux seconds couloirs positionné dans la seconde zone de logement de l'étrier amovible placé dans le premier étrier permanent et un tronçon d'extrémité aval de l'autre des deux seconds couloirs positionné dans la troisième zone de logement du second étrier permanent. Par ailleurs, chaque second couloir comporte dans son tronçon d'extrémité aval une quatrième embouchure d'accès à un canal de circulation d'air qui débouche sur des orifices de sortie aménagés le long d'une paroi interne dudit second couloir, ladite quatrième embouchure communiquant avec la première embouchure lorsque le tronçon d'extrémité aval du second couloir est placé dans la seconde zone de logement et ladite quatrième embouchure communiquant avec la seconde embouchure lorsque le tronçon d'extrémité aval du second couloir est placé dans la troisième zone de logement. Ainsi, lorsque de l'air ventilé est injecté dans la première embouchure sur le premier étrier permanent et dans la seconde embouchure sur le second étrier permanent, cet air ventilé pénètre dans les canaux de circulation d'air par les quatrièmes embouchures qui communiquent avec la première embouchure et respectivement avec la seconde embouchure ; l'air ventilé se propage dans les canaux de circulation d'air et sort dans les seconds couloirs sur toute leurs longueurs, par leurs parois internes. Cet air ventilé dans les seconds couloirs améliore la glisse des paraisons dans ceux-ci. Grâce à cette conception du support de couloir, avec des embouchures, et à cette conception de couloirs, avec des canaux de circulation d'air ventilé, le temps de changement des couloirs est optimal puisqu'il suffit de positionner le tronçon d'extrémité aval du couloir dans la zone de logement de l'étrier pour que celui-ci soit alimenté en air ventilé, la connexion de l'embouchure sur l'étrier permanent n'étant pas à modifier sur le support de couloir lors d'un changement de production nécessitant un remplacement des couloirs.

### Brève description des figures

Les caractéristiques et avantages de l'invention apparaîtront à la lecture de la description suivante s'appuyant sur des figures, parmi lesquelles :
[Fig. 1] schématise une installation de fabrication d'articles creux en verre ;
[Fig. 2] illustre une machine de formage d'articles creux en verre ;
[Fig. 3] illustre des pairs de couloirs et des supports de couloirs qui reçoivent respectivement les tronçons d'extrémité aval des deux couloirs de chaque pair de couloir ;
[Fig. 4] illustre un support de couloir selon une réalisation préférentielle, ledit support de couloir recevant les tronçons d'extrémité aval de deux couloirs ;
[Fig. 5] illustre seul le support de couloir de la figure 4 ;
[Fig. 6] illustre selon un premier angle de vue une première pièce de support sur laquelle est monté un premier étrier permanent, dans lequel est logé un étrier amovible ;
[Fig. 7] illustre selon le premier angle de vue la première pièce de support sur laquelle est monté le premier étrier permanent, sans l'étrier amovible ;
[Fig. 8] illustre l'étrier amovible ;
[Fig. 9] illustre selon un autre angle de vue les éléments de la figure 6, avec en complément un premier organe d'étanchéité placé autour d'une première embouchure ;
[Fig. 10] illustre selon un autre angle de vue les éléments de la figure 6, avec en complément un premier connecteur pour le raccordement d'un circuit d'air ventilé ;
[Fig. 11] illustre selon un premier angle de vue une seconde pièce de support sur laquelle est monté un second étrier permanent ;
[Fig. 12] illustre selon un autre angle de vue les éléments de la figure 11, avec en complément un second organe d'étanchéité placé autour d'une seconde embouchure ;
[Fig. 13] illustre selon un autre angle de vue les éléments de la figure 11, avec en complément un second connecteur pour le raccordement d'un circuit d'air ventilé ;
[Fig. 14] illustre en coupe un tronçon d'extrémité aval d'un couloir placé dans un second étrier permanent du support de couloir.

### Description détaillée

Dans la suite de la description, sans indication contraire : les mêmes références sont utilisées pour désigner les mêmes caractéristiques sur les figures et selon les diverses variantes illustrées, sans indication particulière dans le texte ; la machine de formage d'articles creux en verre est désignée « machine IS » ; l'article creux en verre est désigné « article » ; et l'installation de fabrication d'article creux en verre est désignée « installation ».

Les termes « haut », « bas », « supérieur », « inférieur » qui pourront être utilisés, le seront en considération de la position normale des éléments sur la machine IS, telle qu'implantée sur l'installation. En outre, les termes « amont » et « aval » qui seront utilisés, le seront en considération de l'écoulement normal des paraisons dans les couloirs.

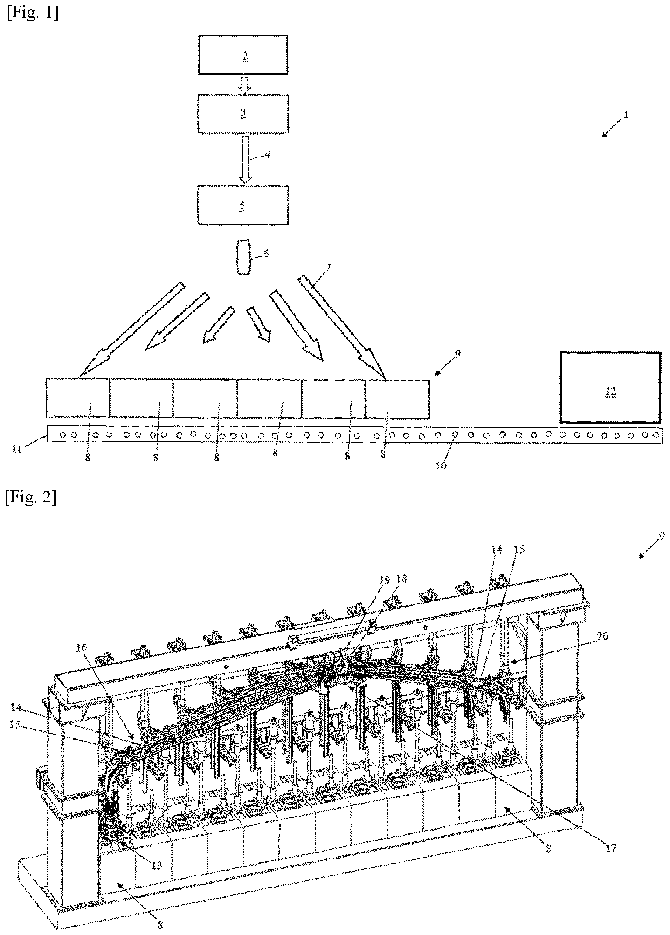

En regard de la figure 1, l'installation 1 comprend un poste de composition 2 où sont mélangés les matières premières (sable, calcaire, carbonate de sodium, calcin, verre recyclé ...) qui entrent dans la composition du verre, un four 3 permettant de fondre le mélange de matières premières, le verre en fusion obtenu étant généralement à une température de l'ordre de 1300°C à 1550°C. Ce verre en fusion est ensuite acheminé au moyen d'un canal 4 qui se termine par un mécanisme 5 de formation des paraisons 6 et de distribution de ces paraisons 6 dans des couloirs 7 qui alimentent respectivement en paraisons 6 des sections 8 de la machine IS 9. Le nombre de couloirs 7 est proportionnel au nombre de sections 8 sur la machine IS 9 et au nombre d'articles 10 fabriqués simultanément sur une section 8. Les articles 10 sont ensuite transférés des sections 8 sur un convoyeur 11 qui achemine lesdits articles 10 vers une arche de recuisson 12 pour leur refroidissement sous contrôle. Le nombre de sections 8 sur la machine IS 9 peut varier. A titre d'exemple, six sections 8 sont schématisées sur la figure 1, tandis que la machine IS 9 sur la figure 2 comprend douze sections 8. Le nombre de sections 8 sur la machine IS 9 pourrait être de huit ou de dix, voire un autre nombre.

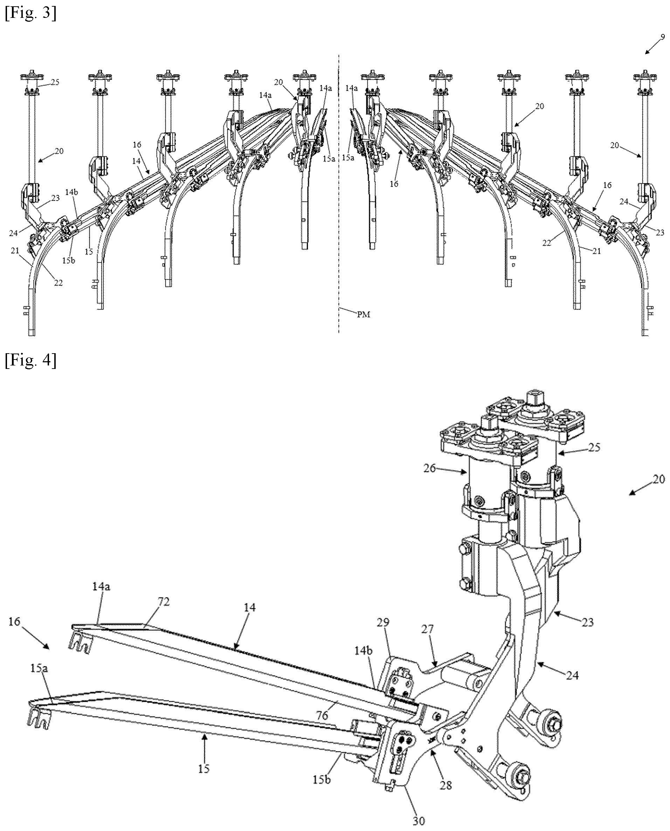

Dans l'exemple décrit, chaque section 8 permet la fabrication en simultané de deux articles 10, le dispositif ébaucheur 13 (illustré sur une seule des sections 8 sur la machine IS 9, en figure 2) de chaque section 8 comprenant deux moules ébaucheurs (non illustrés en détail) et étant donc alimenté en paraisons 6 par deux couloirs 14, 15 illustrés sur les figures 2 à 4. Sur la figure 2, douze paires de couloirs 16 alimentent donc respectivement en paraisons 6 les douze sections 8. Sur la figure 3, seules dix paires de couloirs 16 sont illustrées, la machine IS 9 comportant dans ce cas dix sections 8 (non illustrées sur la figure 3). En regard des figures 2 et 3, les couloirs 14, 15 ont leurs tronçons d'extrémité amont 14a, 15a qui sont montés sur un dispositif répartiteur 17 comprenant deux gouttières incurvées 18, 19 mobiles - également appelées des SCOOP - qui distribuent les paraisons 6 formées respectivement aux deux couloirs 14, 15 de chaque paire de couloirs 16. Sur chaque paire de couloirs 16, 1es couloirs 14, 15 ont par ailleurs leurs tronçons d'extrémité aval 14b, 15b qui sont reçues par un support de couloir 20. Sur la figure 2, la machine IS 9 comprend donc douze supports de couloir 20, un par section 8, tandis qu'elle en comporte dix sur la figure 3. Les paires de couloirs 16 et les supports de couloir 20 sont disposés symétriquement par rapport à un plan médian PM sur la machine IS 9 ; les couloirs 14, 15 des paires de couloir 16 ont donc des longueurs différentes selon leurs positions par rapport audit plan médian PM, comme cela apparaît notamment sur ladite figure 3. Les tronçons d'extrémité aval 14b, 15b des deux couloirs 14, 15 sont juxtaposés respectivement à deux déflecteurs 21, 22 pour chaque section 8, ces deux déflecteurs 21, 22 permettant l'acheminement des paraisons 6 dans le dispositif ébaucheur 13, comme cela est déjà connu sur les machines IS traditionnelles.

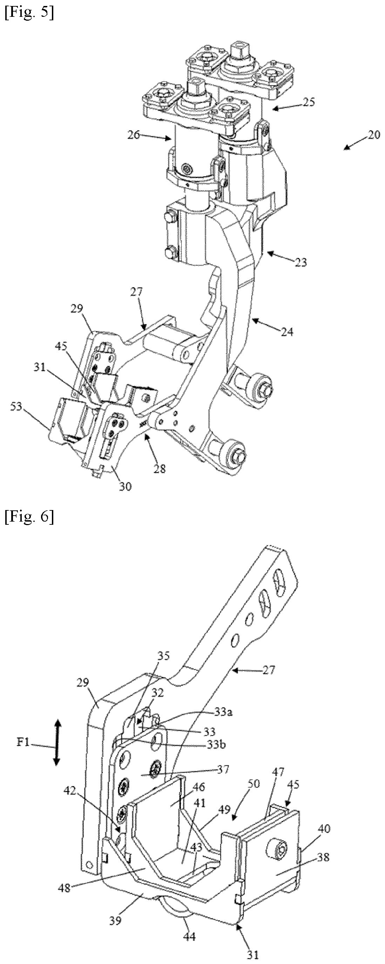

Les figures 4 et 5 montrent en détail le support de couloir 20 selon une conception préférentielle, la figure 4 montrant également plus en détail les deux couloirs 14, 15 d'une paire de couloir 16. Le support de couloir 20 comprend deux bras de support 23, 24 qui sont montés respectivement sur deux tiges de support 25, 26 assujetties à la structure de la machine IS 9 et permettant d'ajuster la position en hauteur des bras support 23, 24 afin de tenir compte des longueurs différentes des couloirs et des pentes à respecter pour ces couloirs et de venir positionner convenablement les déflecteurs 21, 22 par rapport aux deux entonnoirs (non illustrés) du dispositif ébaucheur 13 qui, étant donné la présence d'une paire de couloir 16, permet la fabrication simultanée de deux articles 10 au moyen de deux moules ébaucheurs (non illustrés) sur le dispositif ébaucheur 13 et de moules finisseurs sur le dispositif finisseur (non illustré), comme évoqué précédemment, lesdits déflecteurs 21, 22 étant également supportés par les bras de support 23, 24, comme cela apparaît sur la figure 3. Ces deux bras de support 23,24 comprennent chacun une pièce de support 27, 28 disposant d'une platine 29, 30.

En regard des figures 4 à 10, un premier étrier permanent 31 est monté sur la première platine 29 de la première pièce de support 27 au moyen d'un premier dispositif de réglage 32 permettant de déplacer en hauteur dans le sens de la double flèche F1, ledit premier étrier permanent 31 par rapport à ladite première platine 29. Ce dispositif de réglage 32 est mis en oeuvre au moyen d'une lumière 33 sur la première platine 29 et d'une pièce de guidage 34 montée en liaison glissière dans le sens de la double-flèche F1 vis-à-vis des bords latéraux 33a, 33b de cette lumière 33. Cette pièce de guidage 34 est montée sur une vis sans fin 35 munie d'une tête de réglage 36 qui peut être manipulée pour entraîner la rotation dans un sens ou dans l'autre de ladite vis sans fin 35 et ainsi déplacer vers le haut ou vers le bas la pièce de guidage 34 à l'intérieur de la lumière 33. Une paroi latérale proximale 37 du premier étrier permanent 31 est fixée à la pièce de guidage 34. Le premier étrier permanent 31 comprend également une paroi latérale distale 38, une paroi amont 39, une paroi aval 40 et un premier fond 41 qui définissent avec la paroi latérale proximal 37 une première zone de logement 42. Dans un plan de coupe P1, cette première zone de logement 42 présente la forme d'un U dans laquelle peut être placé un couloir présentant t une première section S1 en forme de U. Le premier fond 41 comprend une première embouchure 43 qui a de préférence une forme oblongue. Sous ce premier fond 41, un premier connecteur 44 est raccordé à la première embouchure 43, ce premier connecteur permettant le raccordement d'un circuit d'air ventilé (non illustré).

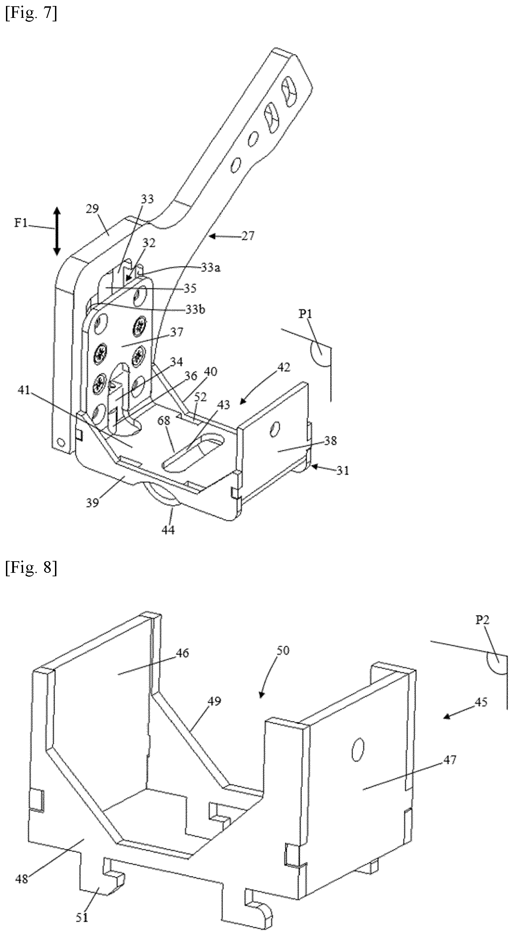

En regard des figures 4 à 10, un étrier amovible 45 est placé dans le premier étrier permanent 31, à l'intérieur de sa première zone de logement 42. L'étrier amovible 45 comprend une paroi latérale proximale 46, une paroi latérale distale 47, une paroi amont 48 et une paroi aval 49 qui définissent une seconde zone de logement 50. Dans un plan de coupe P2, cette seconde zone de logement 50 présente la forme d'un U dans laquelle peut être placé un couloir présentant une seconde section S2 en forme de U. Les parois amont 48 et aval 49 comprennent des pattes 51 qui s'engagent respectivement dans des encoches 52 sur le fond 41 du premier étrier permanents 1, ce qui permet un verrouillage de l'étrier amovible 45 placé dans la première zone de logement 42 du premier étrier permanent 31. D'autres moyens de verrouillage pourraient être prévus entre l'étrier amovible 45 et le premier étrier permanent 31, par exemple des tétons (non illustrés) agencés à la place de pattes 51 qui s'engagent ou s'encliquètent dans des orifices (non illustrés) agencés à la place des encoches 52, voire un emboîtement de la forme externe de l'étrier amovible 45 à l'intérieur de la première zone de logement 42 du premier étrier permanent 31. Sur le mode de réalisation illustré ici, notamment en figure 8, l'étrier amovible 45 ne comporte pas de fond, ce qui laisse apparaître le fond 41 du premier étrier permanent 31 dans la seconde zone de logement 50 de l'étrier amovible 45 placé dans ledit premier étrier permanent 31. En variante non illustrée, l'étrier amovible 45 pourrait comporter un fond et une embouchure identique à la première embouchure 43 sur le fond 41 du premier étrier permanent 31 et correspondant avec celle-ci lorsque l'étrier amovible 45 est placé dans le premier étrier permanent 31.

En regard des figures 4, 5 à 11 à 13, un second étrier permanent 53 est monté sur la seconde platine 30 de la seconde pièce de support 28 au moyen d'un second dispositif de réglage 54 permettant de déplacer en hauteur dans le sens de la double flèche F2, ledit second étrier permanent 53 par rapport à la seconde platine 29. Ce dispositif de réglage 53 est de préférence identique au dispositif de réglage 32 mis en oeuvre entre la première platine 29 et le premier étrier permanent 31 et comporte une lumière 55 agencée sur la seconde platine 30 et une pièce de guidage 56 montée en liaison glissière dans le sens de la double-flèche F2 vis-à-vis des bords latéraux 55a, 55b de cette lumière 55. La pièce de guidage 56 est montée sur une vis sans fin 57 munie d'une tête de réglage 57a qui peut être manipulée pour entraîner la rotation dans un sens ou dans l'autre de ladite vis sans fin 57 et ainsi déplacer vers le haut ou vers le bas la pièce de guidage 56 à l'intérieur de la lumière 55. Une paroi latérale proximale 58 du second étrier permanent 53 est fixée à la pièce de guidage 56. Le second étrier permanent 53 comprend également une paroi latérale distale 59, une paroi amont 60, une paroi aval 61 et un second fond 62 qui définissent avec la paroi latérale proximale 58 une troisième zone de logement 63. Dans un plan de coupe P3, cette troisième zone de logement 63 présente la forme d'un U dans laquelle peut être placé un couloir présentant une seconde section S2, comme pour l'étrier amovible 45. Le second fond 62 comprend une seconde embouchure 64 qui a de préférence une forme oblongue. Sous ce second fond 62, un second connecteur 65 est raccordé à la seconde embouchure 43, ce second connecteur 65 permettant le raccordement d'un circuit d'air ventilé (non illustré).

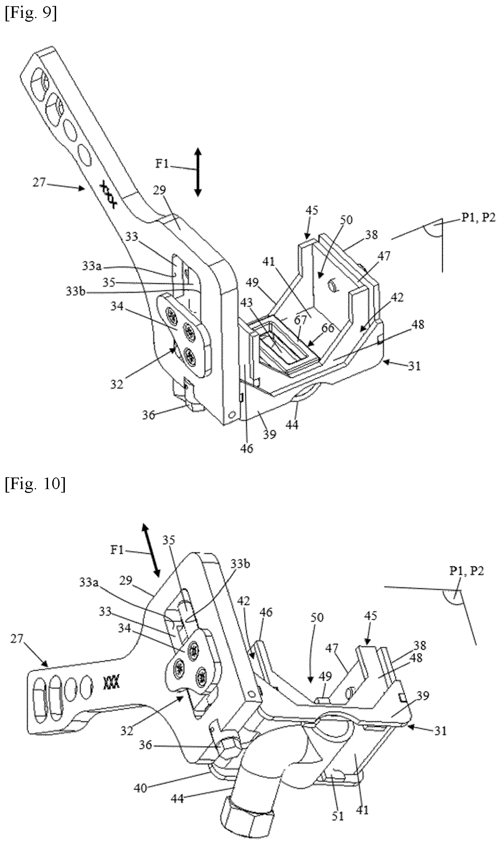

En regard de la figure 9, un premier organe d'étanchéité 66 est positionné sur le premier fond 41 du premier étrier permanent 31 et placé dans la seconde zone de logement 50 de l'étrier amovible 45 lorsque celui-ci est placé dans la première zone logement 42 du premier étrier permanent 31, tel que précisé précédemment. Lorsque l'étrier amovible 45 est retiré du premier étrier permanent 31, cet organe d'étanchéité 66 demeure présent sur le premier fond 41 et est placé dans la première zone de logement 42 dudit premier étrier permanent 31. Le premier organe d'étanchéité 66 est de préférence constitué d'une tresse 67 en inox qui est soudée ou collée sur le pourtour 68 (référencé figures 6 et 7) de la première embouchure 43 agencée sur le premier fond 41. D'autres premiers organes d'étanchéité pourraient être prévus en remplacement de la tresse 67, par exemple un joint de forme similaire à la tresse 67, mais réalisé en caoutchouc fluoré ou un tissu tressé en fibres céramiques.

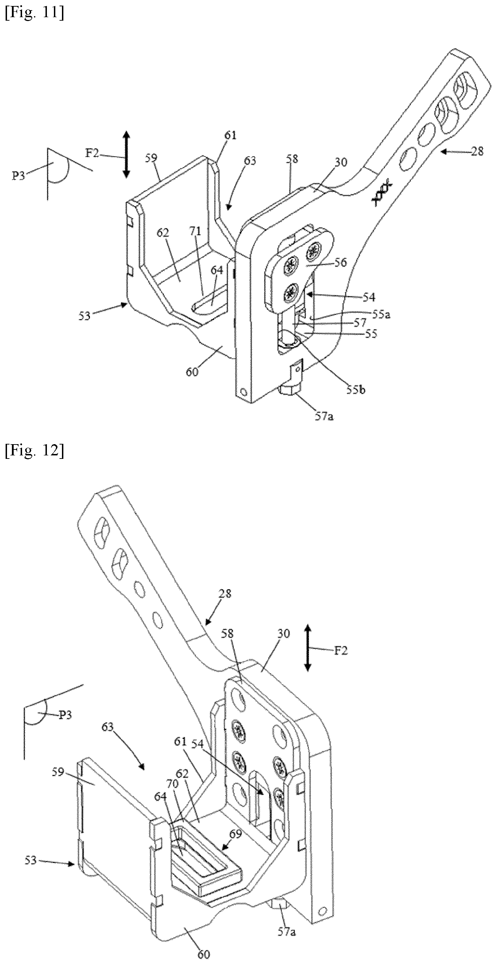

De manière identique, comme l'illustre la figure 12, un second organe d'étanchéité 69 est positionné sur le second fond 62 du second étrier permanent 53 et placé dans la troisième zone de logement 63 dudit second étrier permanent 53. Le second organe d'étanchéité 69 est de préférence constitué d'une tresse 70 en inox qui est soudée ou collée sur le pourtour 71 (référencé figures 6 et 7) de la seconde embouchure 64 agencée le second fond 62. D'autres premiers organes d'étanchéité pourraient être prévus en remplacement de la tresse 70, par exemple un joint de forme similaire à la tresse 67, mais réalisé en caoutchouc fluoré ou un tissu tressé en fibres céramiques.

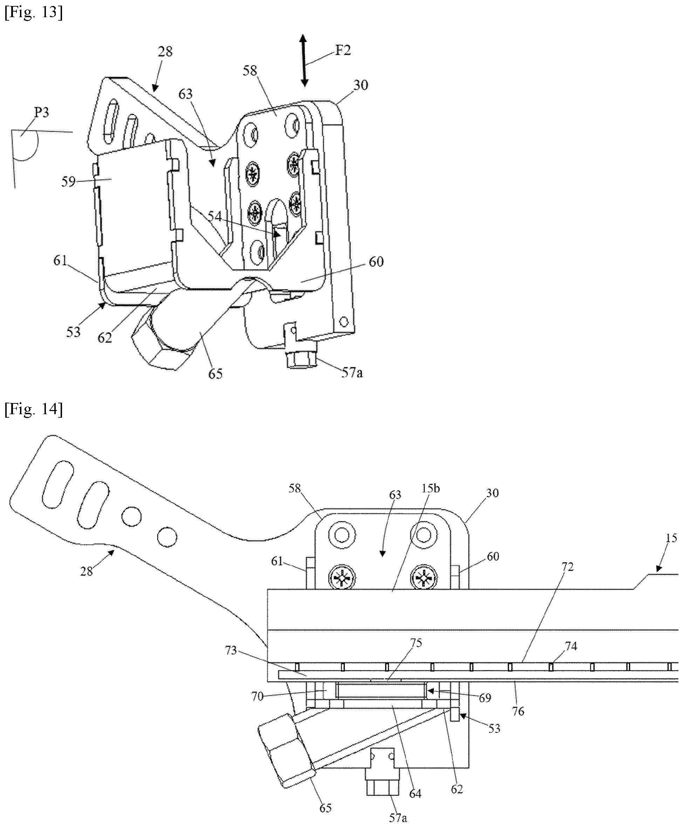

La figure 14 montre notamment le tronçon d'extrémité aval 15b du conduit 15 de la paire de conduits 16, placé dans la troisième zone de logement 63 du second étrier permanent 53. Le conduit 15 comprend une paroi interne 72 en forme de gouttière et un canal 73 qui s'étend sur la longueur du conduit 15, sous cette paroi interne 72. Le canal 73 communique avec la paroi interne 72 en forme de gouttière par l'intermédiaire de petits orifices de sortie 74. Le canal 73 comprend une embouchure 75 qui communique avec la seconde embouchure 64 sur le second étrier permanent 53 recevant ledit tronçon d'extrémité aval 15b. Le second organe d'étanchéité 69 est en contact avec une paroi externe 76 du conduit 15, autour de l'embouchure 75 du canal 73. Ainsi, l'air ventilé pénètre dans le second connecteur 65 et se propage dans le canal 73, sur toute la longueur du conduit 15, puis sort par les orifices de sortie 74 sur la paroi interne 72 en forme de gouttière. Le second organe d'étanchéité 69 évite des fuites d'air ventilé entre le second étrier permanent 53 et le tronçon d'extrémité aval 15b du couloir 15. La présence de l'air ventilé sur la paroi interne 72 du conduit 15 favorise la glisse de la paraison 6 dans le couloir.

Les deux conduits 14, 15 d'une paire de conduit 16 sont identiques, tous les conduits 14, 15 des paires de conduits 16 présentant dans un plan de coupe transversal (perpendiculaire à la longueur des conduits 14, 15) une section S2 en forme de U ayant des dimensions adaptées à la forme de U sur la seconde zone de logement 50 de l'étrier amovible 45 placé dans la première zone de logement 42 du premier étrier permanent 31 et à la forme de U sur la troisième zone de logement 63 du second étrier permanent 53. Le principe de mise en place du tronçon d'extrémité aval 15b du second conduit 15 de la paire de conduits 16, d'écrit précédemment en regard de la figure 14, s'applique de manière équivalente pour le tronçon d'extrémité aval 14b du premier conduit 14 de la paire de conduits 16 placé dans la seconde zone de logement 50 de l'étrier amovible 45 disposé dans la première zone de logement 42 du premier étrier permanent 31, le premier organe d'étanchéité 66 étant alors compressé entre le premier fond 41 du premier étrier permanent 31 et la paroi externe 77 du premier couloir 14, ce qui assure l'étanchéité entre l'étrier amovible 45 placé dans le premier étrier permanent 31 et le tronçon d'extrémité aval 14b du premier conduit 14. L'air ventilé pénètre dans le premier connecteur 44 et se propage dans le canal (non illustré), sur toute la longueur du conduit 14 et sort par les orifices de sortie (non illustrés) sur la paroi interne (non illustrée) en forme de gouttière dudit conduit 14.

La mise en place des conduits 14, 15 de chaque paire de conduits 16 s'effectue aisément sur la machine IS 9, puisqu'il suffit d'engager les tronçons d'extrémité amont 14a, 15a des conduits 14, 15 sur le dispositif répartiteur 17 et d'engager les tronçons d'extrémité aval 14b, 15b desdits couloirs 14, 15 respectivement dans l'étrier amovible 45 placé dans le premier étrier permanent 31 et dans le second étrier permanent 53, le raccordement en air ventilé par le biais des premier et second connecteurs 44, 65 se faisant instantanément lors de cet engagement des tronçons d'extrémité aval 14b, 15b dans l'étrier amovible 45 et dans le second étrier permanent 53.

La machine IS 9 peut être adaptée facilement lors d'un changement de production pour une fabrication d'articles 10 plus volumineux avec des sections 8 adaptées sur lesquelles chaque dispositif ébaucheur 13 est alors conçu pour fabriquer une seule ébauche d'article 10 à la fois (dispositif ébaucheur 13 ayant un seul moule ébaucheur), nécessitant alors la présence d'un seul couloir adapté pour alimenter le dispositif ébaucheur 13en paraisons 6 plus grosses. Dans ce cas, le couloir présente une conception similaire à celle des deux couloirs 14, 15 de chaque paire de couloirs 16, mais il présente dans un plan de coupe transversale une section S1 en forme de U qui est plus grande que la section S2 en forme de U desdits deux couloirs 14, 15. La conception du support de couloir 20 selon l'invention permet avantageusement de recevoir le tronçon d'extrémité aval du couloir de section S1, sans modification dudit support de couloir 20. Il suffit de retirer l'étrier amovible 45 du premier étrier permanent 31, ledit premier étrier permanent 31 présentant une première zone de logement 42 dimensionnée pour recevoir ledit tronçon d'extrémité aval du couloir de section S1. Dans ce cas, l'organe d'étanchéité 66 sur le premier fond 41 du premier étrier permanent 31 est compressé par le tronçon d'extrémité aval du couloir de section S1, assurant ainsi l'étanchéité durant la circulation de l'air ventilé qui pénètre par le premier connecteur 44 et se propage dans le canal dudit couloir. Dans ce cas, le second étrier permanent 53 ne reçoit aucun couloir (il n'est pas utilisé). Inversement, lors d'un changement de production pour une fabrication d'articles 10 moins volumineux avec des sections 8 adaptées sur lesquelles chaque dispositif ébaucheur 13 est alors conçu pour fabriquer deux ébauches d'articles 10 à la fois (dispositif ébaucheur 13 ayant deux moules ébaucheurs), nécessitant la présence d'une paire de couloir 16 par section 8, il suffit de repositionner l'étrier amovible 45 dans le premier étrier permanent 31 pour revenir à la configuration décrite précédemment en regard des figures 2 à 14.

Des variantes sont envisageables dans le cadre de l'invention. On pourrait à l'extrême prévoir un support de couloir 20 avec seulement une pièce de support 27, un premier étrier permanent 31 muni d'une première embouchure 43 et recevant le tronçon d'extrémité aval d'un couloir qui comprend un canal dont l'embouchure communique avec la première embouchure 43 lorsque ledit tronçon d'extrémité aval du couloir est placé dans la première zone de logement 42 dudit premier étrier permanent 31.

Dans le cadre de l'invention, des variantes de conception sont envisageables avec un support de couloir 20 qui ne comporte que le premier bras de support 23, avec la première pièce de support 27, le premier étrier permanent 31 et l'étrier amovible 45 se plaçant dans ledit premier étrier permanent 31, afin de permettre son adaptation pour recevoir un couloir de section S1 en l'absence de l'étrier amovible 45 ou un couloir de section S2 en la présence de l'étrier amovible 45 dans le premier étrier permanent 31.

Dans le cadre de l'invention, des variantes de conception sont envisageables avec un support de couloir 20 comportant deux bras de support 23, 24 identiques et correspondant au bras de support 23, c'est-à-dire en remplaçant le second étrier permanent 53 sur la seconde pièce de support 28 par un premier étrier permanent 31 recevant également un étrier amovible 45. Cette conception permettrait de placer deux premiers couloirs présentant une section S1 sur le support de couloir 20 ou deux seconds couloirs présentant une section S2 sur le support de couloir 20, par exemple pour alimenter deux dispositifs ébaucheurs de conceptions différentes permettant tous les deux la fabrication simultanée de deux ébauches d'articles 10, mais nécessitant des paraisons 6 de grosseurs différentes. Dans ce cas, il serait aussi possible de prévoir plusieurs jeux d'étriers amovibles 31 capables de recevoir les tronçons d'extrémités aval des couloirs 14, 15 de paires de couloir 16 présentant des sections Si différentes, par exemple, un premier jeu d'étriers amovibles 45 permettant de recevoir des couloirs de section S2, un second jeu d'étriers amovibles 45 permettant de recevoir des couloirs de section S3 et un jeu d'étiers amovibles 45 permettant de recevoir des couloirs de section S4. Dans ce cas, il serait également possible de dupliquer le principe sur des variantes de conception avec un support de couloir 20 comportant trois ou quatre bras de support identiques et correspondant au bras de support 23.

Dans le cadre de l'invention, des variantes de conception sont envisageables avec un support de couloir 20 qui permettrait la réception des tronçons d'extrémité de trois voire de quatre couloirs présentant une section identique grâce à la présence de trois voire de quatre bras support sur ledit support de couloir 20, en dupliquant en cascade la mise en oeuvre du premier bras support 23 et du second bras support 24 sur les suivants. Par exemple, le support de couloir 20 pourrait comprendre un premier bras support avec un premier étrier permanent permettant la réception d'un couloir de section S1, un second bras avec un second étrier permanent permettant la réception d'un couloir de section S2, un troisième bras avec un troisième étrier permanent permettant la réception d'un couloir de section S3, un quatrième bras avec un quatrième étrier permanent permettant la réception d'un couloir de section S4, un étrier amovible pouvant être placé dans le premier étrier permanent et permettant la réception d'un couloir de section S2, un jeu de deux étriers amovibles pouvant être placés respectivement dans les premier et second étriers permanents et permettant la réception de couloirs de section S3 et, un jeu de trois étriers amovibles pouvant être placés respectivement dans les premier, second et troisième étriers permanents et permettant la réception de couloirs de section S4.

La machine IS comprend également un dispositif de ventilation pour créer de l'air ventilé et des circuits raccordés sur les connecteurs 44, 65 sous les étriers permanents 31, 53, pour le cas de réalisation du support de couloir 20 des figures 3 à 13, voire pour toute autre variante de conception dans le cadre de l'invention.

Dans une variante envisageable, les premier et second étriers permanents 31 et 53 pourraient être supportés par une même pièce de support montée sur une même tige de support, ce qui offrirait toutefois moins de liberté dans le positionnement des déflecteurs 21, 22 vis-à-vis du dispositif ébaucheur 13 sur chaque section 8.

## Revendications

1. Support de couloir (20) d'une machine (9) de formage d'articles creux en verre (10), **caractérisé en ce qu'**il comprend une première pièce de support (27), un premier étrier permanent (31) assemblé à la première pièce de support (27) et comportant une première zone de logement (42) dimensionnée pour réceptionner un tronçon d'extrémité aval d'un premier couloir qui présente une première section S1 dans un plan de coupe transversal et qui comporte dans son tronçon d'extrémité aval une troisième embouchure d'accès à un canal de circulation d'air agencé sur ledit couloir, le premier étrier permanent (31) comprenant un fond (41) muni d'une première embouchure (43) débouchant dans la première zone de logement (42), ladite première embouchure (43) étant configurée pour communiquer avec la troisième embouchure lorsque la première zone de logement (42) réceptionne le tronçon d'extrémité aval du premier couloir.

2. Support de couloir (20) selon la revendication 1, lequel comprend un organe d'étanchéité (66) agencé autour de la première embouchure (43) sur le fond (41) du premier étrier permanent (31), dans la première zone de logement (42), de sorte à assurer l'étanchéité entre la première embouchure (43) et la troisième embouchure lorsque la première zone de logement (42) réceptionne le tronçon d'extrémité aval du premier couloir.

3. Support de couloir (20) selon l'une quelconque des revendications 1 ou 2, lequel comprend un premier connecteur (44) agencé sous le premier étrier permanent (31) et raccordé à la première embouchure (43), ledit premier connecteur (44) étant configuré pour permettre la connexion d'un circuit d'air.

4. Support de couloir (20) selon l'une quelconque des revendications 1 à 3, lequel comprend un premier dispositif de réglage (32) agencé entre la première pièce de support (27) et le premier étrier permanent (31), ledit premier dispositif de réglage (32) étant configuré pour modifier la position en hauteur dudit premier étrier permanent (31).

5. Support de couloir (20) selon l'une quelconque des revendications 1 à 5, laquelle comprend une seconde pièce de support (28), un second étrier permanent (53) assemblé à la seconde pièce de support (28) et comportant une troisième zone de logement (63) dimensionnée pour réceptionner un tronçon d'extrémité aval (15b) d'un second couloir (15) présentant une seconde section S2 dans un plan de coupe transversal, le second étrier permanent (53) comprenant un second fond (62) muni d'une seconde embouchure (64) débouchant dans la troisième zone de logement (63).

6. Support de couloir (20) selon la revendication 5, lequel comprend un second organe d'étanchéité (69) agencé autour de la seconde embouchure (64) sur le second fond (62) du second étrier permanent (53), dans la troisième zone de logement (63).

7. Support de couloir (20) selon l'une quelconque des revendications 5 ou 6, lequel comprend un second connecteur (65) agencé sous le second étrier permanent (53) et raccordé à la seconde embouchure (64), ledit second connecteur (65) étant configuré pour permettre la connexion d'un circuit d'air.

8. Support de couloir (20) selon l'une quelconque des revendications 5 à 7, lequel comprend un second dispositif de réglage (54) agencé entre la seconde pièce de support (28) et le second étrier permanent (53), ledit second dispositif de réglage (54) étant configuré pour modifier la position en hauteur dudit second étrier permanent (53).

9. Support de couloir (20) selon l'une quelconque des revendications 5 à 8, dans lequel le premier étrier permanent et le second étrier permanent sont identiques.

10. Support de couloir (20) selon l'une quelconque des revendications 1 à 8, lequel comprend un étrier amovible (45) dont la forme externe est complémentaire à la première zone de logement (42) pour venir se placer dans ladite première zone de logement (42) et monter l'étrier amovible (45) dans le premier étrier permanent (31), ledit étrier amovible (45) comportant une seconde zone de logement (50) dimensionnée pour réceptionner un tronçon d'extrémité aval (14b) d'un second couloir (14) présentant une seconde section S2 dans un plan de coupe transversal, la seconde section S2 étant plus petite que la premier section S1.

11. Support de couloir (20) selon la revendication 10, dans lequel l'étrier amovible (45) comprend un fond ouvert configurée pour que la première embouchure (43) débouche dans la seconde zone de logement (50) lorsque l'étrier amovible (45) est placé dans le premier étrier permanent (31).

12. Machine de formage d'articles creux en verre, dite machine IS (9), laquelle comprend au moins un support de couloir (20) selon l'une quelconque des revendications 1 à 11, de préférence entre deux et seize supports de couloir (20).

13. Machine IS (9) selon la revendication 11, dans laquelle chaque support de couloir (20) comprend au moins les caractéristiques de l'une quelconque des revendications 10 ou 11, ladite machine IS (9) comprenant autant de premiers couloirs que de supports de couloir (20), chaque premier couloir ayant son tronçon d'extrémité aval positionné dans la première zone de logement (42), l'étrier amovible (45) étant retiré du premier étrier permanent (31), chaque premier couloir comportant dans son tronçon d'extrémité aval une troisième embouchure d'accès à un canal de circulation d'air qui débouche sur des orifices de sortie aménagés le long d'une paroi interne dudit premier couloir, ladite troisième embouchure communiquant avec la première embouchure (43) lorsque le tronçon d'extrémité aval du premier couloir est placé dans la première zone de logement (42).

14. Machine IS (9) selon la revendication 11, dans laquelle chaque support de couloir (20) comprend au moins les caractéristiques de l'une quelconque des revendications 10 ou 11, ladite machine IS (9) comprenant autant de paires de seconds couloirs (16) que de supports de couloir (20), chaque paire de seconds couloirs (16) ayant le tronçon d'extrémité aval (14b) de l'un (14) des deux seconds couloirs positionné dans la seconde zone de logement (50) de l'étrier amovible (45) dans le premier étrier permanent (31) et le tronçon d'extrémité aval (15b) de l'autre (15) des deux seconds couloirs positionné dans la troisième zone de logement (63) du second étrier permanent (53), chaque second couloir (14, 15) comporte dans son tronçon d'extrémité aval (14b, 15b) une quatrième embouchure (75) d'accès à un canal (73) de circulation d'air qui débouche sur des orifices de sortie (74) aménagés le long d'une paroi interne (72) dudit second couloir (14, 15), ladite quatrième embouchure (75) communiquant avec la première embouchure (43) lorsque le tronçon d'extrémité aval (14b) du second couloir (14) est placé dans la seconde zone de logement (50) et ladite quatrième embouchure (75) communiquant avec la seconde embouchure (64) lorsque le tronçon d'extrémité aval (15b) du second couloir (15) est placé dans la troisième zone de logement (63).
